# EUROPÄISCHE PATENTANMELDUNG

(11) **EP 1 308 701 A2**
(43) Veröffentlichungstag der Anmeldung: **07.05.2003**
(21) Anmeldenummer: 02022671.8
(22) Anmeldetag: 10.10.2002
(51) Int. Cl.: G01F 1/06, G01F 1/10, G01F 25/00

(54) **Turbinendurchflussmesser mit Diagnoseeinrichtung**

(30) Priorität: 31.10.2001 DE 10153687
(71) Anmelder: ELSTER GmbH, 55252 Mainz-Kastel (DE)
(72) Erfinder: Kettner, Thomas, 65623 Netzbach (DE); Dietrich, Harald, 55129 Mainz (DE); Pfaff, Ortwin, 55126 Mainz (DE)
(74) Vertreter: Harlacher, Mechthild

(57) **Zusammenfassung**

Das Durchfluß-Meßgerät ist versehen mit einem durchflußabhängig arbeitenden HF-Impulsgeber (3), einer Auswerteinrichtung (4), die an den HF-Impulsgeber (3) angeschlossen ist, und einer Diagnoseeinrichtung (6), die über die Auswerteinrichtung (4) an den HF-Impulsgeber (3) angeschlossen ist. Die Diagnoseeinrichtung (6) ist in den elektronischen Zähler integriert und leitet aus den von der Auswerteinrichtung (4) verarbeiteten Impulsen Informationen über Beeinträchtigungen der Meßgenauigkeit ab, beispielsweise über Pulsationen im Meßmedium, über Lagerschäden u. dgl. Diese Informationen ermöglichen eine Kompensation von Meßfehlern.

## Beschreibung

Die Erfindung betrifft ein Durchfluß-Meßgerät, insbesondere einen Turbinenradzähler. Durchfluß-Meßgeräte können den momentanen Durchfluß anzeigen und Zählerstände aufsummieren.

Der Erfindung liegt die Aufgabe zugrunde, ein Durchfluß-Meßgerät zu schaffen, das darüber hinaus in der Lage ist, Aufschluß über die Meßgenauigkeit zu liefern.

Hierzu ist das Durchfluß-Meßgerät erfindungsgemäß versehen mit
- einem durchflußabhängig arbeitenden HF-Impulsgeber,
- einer Auswerteinrichtung, die an den HF-Impulsgeber angeschlossen ist, und
- einer Diagnoseeinrichtung, die über die Auswerteinrichtung an den HF-Impulsgeber angeschlossen ist.

Die Diagnoseeinrichtung ist in der Lage, die Pulsfolge des HF-Impulsgebers derart auszuwerten, daß Unregelmäßigkeiten, wie Pulsationen im Meßmedium, Vorstörungen in der Strömung sowie Beschädigungen im mechanischen Bereich des Meßgeräts erkannt werden können. Bei letzteren handelt es sich im Falle eines Turbinenradzählers vor allen Dingen um Lagerschäden und Beschädigungen des Meßrades. Diese Unregelmäßigkeiten beeinträchtigen die Meßgenauigkeit. Ihre Erfassung und Auswertung bietet daher die Möglichkeit für entsprechende Kompensationen.

Durch die Integration der Diagnoseeinrichtung in das elektronische Zählwerk bietet sich der Vorteil, daß die Impulse des HF-Impulsgebers nur einmal aufbereitet werden müssen und parallel für die Zählwerksfunktion sowie für die Diagnosefunktion genutzt werden können. Die Diagnoseeinrichtung-bedient sich der Kommunikationsanbindung des elektronischen Zählwerks, um Alarmmeldungen und Informationen über die Zuverlässigkeit der Messungen an die jeweils gewünschte Stelle weiterzuleiten.

Die Herstellungskosten zur Erzielung der zusätzlichen Diagnosefunktion sind aufgrund der integrierten Funktionalität vergleichsweise gering.

Dies gilt insbesondere dann, wenn die Diagnoseeinrichtung zusammen mit der Auswerteinrichtung eine eigenständige Baugruppe bildet. Diese Baugruppe kann räumlich getrennt vom Zählwerkgehäuse angeordnet sein. Vorteilhafter hingegen ist es, sie am Zählwerkgehäuse anzuordnen.

Als Alternative wird in Weiterbildung der Erfindung vorgeschlagen, die Diagnoseeinrichtung einer an die Auswerteinrichtung angeschlossenen Kommunikationseinheit zuzuordnen.

Besonders vorteilhaft ist es, die Diagnoseeinrichtung an einen Datenspeicher anzuschließen. Dies bietet die Möglichkeit, Diagnose-Rohdaten und aufbereitete Statusinformationen lokal aufzuzeichnen und für eine weitere Detail-Analyse Verfügung zu stellen. Die Aufzeichnung der Daten kann in Abhängigkeit von der erfaßten Meßgenauigkeit erfolgen.

Die Auswerteinrichtung ist vorzugsweise als Mengenumwerter zur Verarbeitung zusätzlicher Eingangsgrößen ausgebildet. Beispielsweise können neben dem Volumenstrom Druck und Temperatur erfaßt werden.

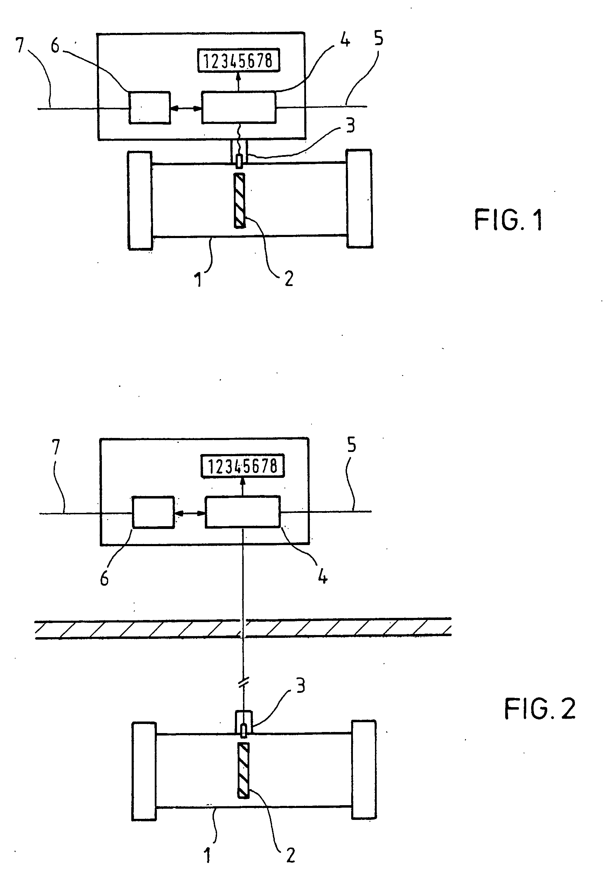

Die Erfindung wird im folgenden anhand von vier bevorzugten Ausführungsbeispielen in Verbindung mit den Figuren 1 bis 4 der beiliegenden Zeichnung näher erläutert.

Figur 1 zeigt einen Turbinenradzähler 1, dessen Meßrad 2 hochfrequente Impulse in einem HF-Impulsgeber 3 erzeugt. An den HF-Impulsgeber 3 ist eine Auswerteinrichtung 4 angeschlossen, die die Impulse verarbeitet und das Ergebnis an eine Datenschnittstelle 5 liefert, beispielsweise an eine Enkoder-Schnittstelle.

An die Auswerteinrichtung 4 ist ferner eine Diagnoseeinrichtung 6 angeschlossen. Sie wird mit Informationen aus den von der Auswerteinrichtung 4 bearbeiteten Impulsen versorgt und erfaßt Einflüsse, die die Meßgenauigkeit des elektronischen Zählwerks beeinträchtigen, beispielsweise Pulsationen im Meßmedium, Lagerschäden, Beschädigungen des Meßrades 2, Vorstörungen in der Strömung etc. Die von der Diagnoseeinrichtung 6 gelieferten Informationen werden über die Auswerteinrichtung 4 der Schnittstelle 5 zugeführt. Die Diagnoseeinrichtung 6 bedient sich also der Kommunikationsanbindung der Auswerteinrichtung 4. Ferner weist die Diagnoseeinrichtung 6 einen Alarmausgang 7 auf, um eine eigenständige Alarmfunktion erfüllen zu können.

Die Auswerteinrichtung 4 und die Diagnoseeinrichtung 6 bilden eine eigenständige Baugruppe, die gemäß Figur 1 am Gehäuse des Turbinenradzählers 1 angeordnet ist. Die Ausführungsform nach Figur 2 unterscheidet sich von der nach Figur 1 dadurch, daß die von der Auswerteinrichtung 4 und der Diagnoseeinrichtung 6 gebildete Baugruppe im Abstand vom Turbinenradzähler 1 angeordnet ist. Die Trennung kann explosionsgeschützt sein.

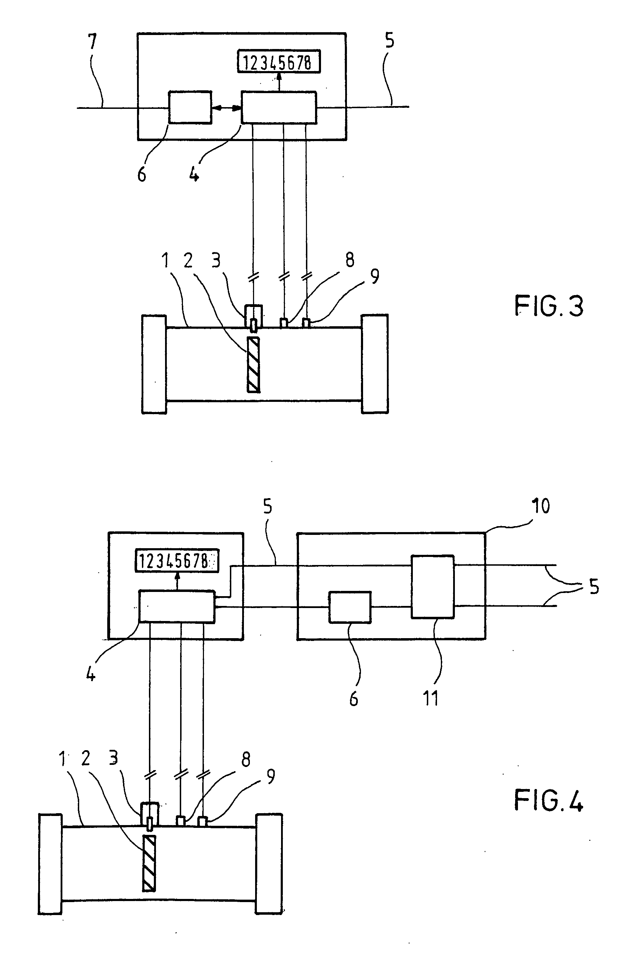

Bei der Ausführungsform nach Figur 3 ist die Auswerteinrichtung 4 als Mengenumwerter ausgebildet. Sie verarbeitet nicht nur die vom HF-Impulsgeber 3 gelieferten Impulse, sondern auch einen von einer Druckmeßstelle 8 gelieferten Druckwert sowie einen von einer Temperaturmeßstelle 9 gelieferten Temperaturwert. Die Datenschnittstelle 5 wird hier von einem Mod-Bus gebildet.

Figur 4 schließlich zeigt eine Anordnung, die sich von der nach Figur 3 dadurch unterscheidet, daß die Diagnoseeinrichtung 6 einer Kommunikationseinheit 10 zugeordnet ist. Letztere enthält ein Modem 11, welches sowohl an die Auswerteinrichtung 4 als auch an die die Diagnoseeinrichtung 6 angeschlossen ist. Nach wie vor stehen die Auswerteinrichtung 4 und die Diagnoseeinrichtung 6 direkt miteinander in Verbindung.

In jedem Fall kann die Diagnoseeinrichtung über die Schnittstelle 5 mit einem Datenspeicher in Verbindung stehen.

## Patentansprüche

1. Durchfluß-Meßgerät, insbesondere Turbinenradzähler (1), mit
- einem durchflußabhängig arbeitenden HF-Impulsgeber (3),
- einer Auswerteinrichtung (4), die an den HF-Impulsgeber (3) angeschlossen ist, und
- einer Diagnoseeinrichtung (6), die über die Auswerteinrichtung (4) an den HF-Impulsgeber angeschlossen ist.

2. Durchfluß-Meßgerät nach Anspruch 1, **dadurch gekennzeichnet, daß** die Diagnoseeinrichtung (6) zusammen mit der Auswerteinrichtung (4) eine eigenständige Baugruppe bildet.

3. Durchfluß-Meßgerät nach Anspruch 2, **dadurch gekennzeichnet, daß** die von der Diagnoseeinrichtung (6) und der Auswerteinrichtung (4) gebildete Baugruppe am Zählwerkgehäuse angeordnet ist.

4. Durchfluß-Meßgerät nach Anspruch 1, **dadurch gekennzeichnet, daß** die Diagnoseeinrichtung (6) einer an die Auswerteinrichtung (4) angeschlossenen Kommunikationseinheit (10) zugeordnet ist.

5. Durchfluß-Meßgerät nach einem der Ansprüche 1 bis 4, **dadurch gekennzeichnet, daß** die Diagnoseeinrichtung (6) an einen Datenspeicher angeschlossen ist.

6. Durchfluß-Meßgerät nach einem der Ansprüche 1 bis 5, **dadurch gekennzeichnet, daß** die Auswerteinrichtung (4) als Mengenumwerter zur Verarbeitung zusätzlicher Eingangsgrößen ausgebildet ist.
